# EUROPÄISCHE PATENTSCHRIFT

(11) **EP 3 591 752 B1**
(45) Veröffentlichungstag und Bekanntmachung des Hinweises auf die Patenterteilung: **31.03.2021**
(21) Anmeldenummer: 19181189.2
(22) Anmeldetag: 19.06.2019
(51) Int. Cl.: H01M 6/38

(54) **AKTIVIERUNGSEINRICHTUNG FÜR EINE BATTERIE FÜR EINEN ELEKTRONISCHEN ZÜNDMECHANISMUS**
ACTIVATION DEVICE FOR A BATTERY FOR AN ELECTRONIC IGNITION MECHANISM
DISPOSITIF D'ACTIVATION D'UNE BATTERIE POUR UN MÉCANISME D'ALLUMAGE ÉLECTRONIQUE

(30) Priorität: 29.06.2018 DE 102018005202
(43) Veröffentlichungstag der Anmeldung: 08.01.2020
(73) Patentinhaber: Diehl & Eagle Picher GmbH, 90552 Röthenbach (DE)
(72) Erfinder: HEIN, Roland, 90453 Nürnberg (DE)
(74) Vertreter: Diehl Patentabteilung

(56) Entgegenhaltungen:
- EP-A2- 1 467 423
- CH-A- 297 558
- US-A- 2 918 516

## Beschreibung

Die Erfindung betrifft eine Aktivierungseinrichtung für eine Batterie für einen elektronischen Zündmechanismus, umfassend eine mit einem Elektrolyten gefüllte Ampulle, sowie eine Einrichtung zum Zerbrechen der Ampulle.

Eine solche Aktivierungseinrichtung dient zum Aktivieren einer Batterie für einen elektronischen Zündmechanismus eines Geschosses, das über ein Waffenrohr verschießbar ist. In EP 1 467 423 A2 ist beispielshaft eine solche Aktivierungseinrichtung beschrieben. Mit dem Verschießen wird die Aktivierungseinrichtung betätigt, so dass die Ampulle aufgebrochen wird und der Elektrolyt die benachbarte Batteriezelle galvanisch aktiviert.

Der Aktivierungsmechanismus, wie er beispielsweise aus EP 1 467 423 A2 bekannt ist, umfasst neben der Ampulle auch eine entsprechende Einrichtung zum Zerbrechen derselben. Hierzu ist die Ampulle auf einem vorzugsweise ringförmigen Lagerelement aufgelagert, das über wenige schmale Verbindungsstege mit einem Träger verbunden ist, der im Inneren des ringförmigen Lagerelements angeordnet ist, mithin also unterhalb der Ampulle positioniert ist. Wird nun das Geschoss verschossen, so wirkt beschleunigungsbedingt eine hohe Kraft auf die Ampulle und über diese auf das Lagerelement, was dazu führt, dass die Verbindungsstege abgeschert werden und die Ampulle freigegeben wird, so dass sie gegen den Träger schlägt, was zum Brechen der Ampulle und damit zur Aktivierung der Batterie über den ausströmenden Elektrolyten führt. Um diese Aktivierung zu erwirken, ist eine Auslöseschwelle zu überschreiten, mithin also eine hinreichende Krafteinwirkung durch die Abschussbeschleunigung zu erzielen, damit die Verbindungsstege abgeschert werden und es zum Aufbrechen der Ampulle kommt. Unterstützt wird die Aktivierung durch ein oberhalb der Ampulle angeordnetes elastisches Element, das zwischen die Ampullenoberseite und einen Gehäusedeckel gespannt ist und eine Vorspannkraft auf die Ampulle und damit auf das Lagerelement ausübt.

Neben der bestimmungsgemäßen Aktivierung ab einem bestimmten Beschleunigungsniveau ist jedoch aus Sicherheitsgründen auch eine Nichtaktivierung in Fällen sicherzustellen, in denen es zwar zu einer Beschleunigung kommt, diese jedoch nicht gewollt ist, beispielsweise, wenn das Geschoss zu Boden fällt. Auch hierbei kommt es zu einer mitunter beachtlichen Beschleunigung, die aber keinesfalls zu einem Auslösen führen darf. Aus Sicherheitsgründen sollte also die Auslöseschwelle relativ hoch sein. Dem gegenüber wird jedoch oft eine relativ niedrige Auslöseschwelle gefordert, insbesondere wenn der Verschuss mit niedrigerer Abschussbeschleunigung erfolgt. Solche niedrigen Abschlussbeschleunigungen liegen bei etwa dem 1000- 2000-fachen der Erdbeschleunigung. Dem gegenüber werden bei entsprechenden Falltests weit höhere Beschleunigungen auftreten.

EP 1 467 423 A2 begegnet diesem Problem durch eine entsprechend hoch ausgelegte Auslöseschwelle, indem die Verbindungstege derart ausgelegt werden, dass sie erst bei einer hohen Beschleunigung, zum Beispiel dem 5000-fachen der Erdbeschleunigung abscheren. Das heißt, dass hier eine relativ hohe Auslöseschwelle realisiert wird. Eine solch relativ hohe Auslöseschwelle ist dort zu wählen, da die Impulsunterdrückungsfähigkeit der Scherverbindung relativ gering ist.

Wie beschrieben ist bei der aus EP 1 467 423 A2 bekannten Aktivierungseinrichtung zwischen Gehäusedeckel und Ampullendeckel ein elastisches Spannelement angeordnet, das die Ampulle gegen das ringförmige Lagerelement spannt. Die Zellstapel sind, die Ampulle und das Lagerelement ringförmig umgebend, in dem Gehäuse angeordnet und axial mit einem entsprechenden Druck verspannt. Unterseitig sind sie auf einem entsprechenden Ringträger aufgelagert, oberseitig bildet das Gehäuse, üblicherweise ein Blechgehäuse, selbst den Abschluss. Über dieses Einspannen zwischen dem ringförmigen Träger und dem Gehäuse wird ein definierter Druck auf den Zellstapel aufgebracht. Dieser benötigte Druck respektive das Einspannen bestimmt damit die Bauhöhe der Batterie. Die Bauhöhe ist jedoch bestimmt durch die Toleranzen jedes einzelnen Bauteils in der Kette. Dies führt zu unterschiedlichen Höhen bzw. Drücken auf den Zellstapel bei der Serienfertigung der Batterien. Die unterschiedlichen Batterie- oder Gehäusehöhen können sich jedoch nachteilig auf die Aktivierungseinrichtung respektive deren Funktion und insbesondere die Auslöseschwelle auswirken. Wie ausgeführt ist das elastische Spannelement zwischen Gehäusedeckel und Ampullendeckel gespannt. Variiert nun der Abstand zwischen Gehäusedeckel und Ampullendeckel geringfügig, so variiert zwangsläufig auch der Druck, mit dem das Spannelement die Ampulle belastet respektive gegen das Lagerelement spannt. Das Lagerelement und damit die Sollbruchstellen sind demzufolge mitunter unterschiedlich belastet, was sich wiederum auf die Auslöseschwelle auswirkt, da diese je nach gegebenen Toleranzen von Batterie zu Batterie unterschiedlich sein kann.

Der Erfindung liegt damit das Problem zugrunde, eine dem gegenüber verbesserte Aktivierungseinrichtung anzugeben.

Zur Lösung dieses Problems ist bei einer Aktivierungseinrichtung der eingangs genannten Art erfindungsgemäß vorgesehen, dass die Einrichtung zum Zerbrechen zwei an einem gemeinsamen Bauteil im Gehäuseinneren vorgespannt fixierte Blattfederelemente umfasst, zwischen denen das Gefäß eingespannt ist, wobei zumindest das die Ampulle bodenseitig auflagernde Blattfederelement bei Aufbringen einer beschleunigungsbedingten Kraft von einer ersten Form in eine zweite Form umschnappt.

Erfindungsgemäß ist die Ampulle zwischen zwei Blattfederelementen eingespannt, hierüber also fixiert. Die beiden Blattfederelemente sind an einem gemeinsamen Bauteil im Gehäuseinneren angeordnet und in vorgespannter Form fixiert. Dies ermöglicht es vorteilhaft, die Fixierung der Ampulle von der Anordnung der Zellen respektive der Verspannung der Zellen vollständig zu entkoppeln. Damit ist die Fixierung der Ampulle losgelöst und von der realen Bauhöhe des Gehäuses vollständig entkoppelt, so dass sich etwaige Schwankungen innerhalb der Bauhöhe in keinem Fall auf die Lagerung der Ampulle und damit auf die über dieselbe definierte Auslöseschwelle auswirken.

Die Auslöseschwelle wird im Wesentlichen über das die Ampulle bodenseitig auflagernde Blattfederelement definiert. Dieses Blattfederelement ist derart verspannt und angeordnet, dass es bei Aufbringen einer hinreichend hohen beschleunigungsbedingten Kraft von einer ersten Form, in der die Ampulle fixiert ist, in eine zweite Form umschnappt. Es ist also als ein seine Form wechselndes Schnappfederelement ausgebildet. Ausgehend vom Ausgangszustand, wenn keine Kraft auf die Aktivierungseinstellung ausgeübt wird, und in der sich das Blattfederelement in einer ersten Form befindet, schnappt es bei hinreichend hoher Kraft in die zweite Form um, wobei mit diesem Umschnappvorgang auch die Zerstörung der Ampulle und damit das Freisetzen des Elektrolyten einhergeht.

Über die mechanischen Eigenschaften des unteren Blattfederelements respektive Schnappfederelements kann die Auslöseschwelle definiert eingestellt werden, also das Kraftniveau und die Dauer der Krafteinwirkung festgelegt werden. Das heißt, dass das Blattfederelement so ausgelegt werden kann, dass ein nur kurzzeitiger Kraftimpuls, wie beispielsweise im Rahmen eines Falltests für nur einige µ-Sekunden wirkt, nicht ausreichend ist, um den Schnappvorgang einzuleiten. Es kann hierbei zu einer leichten Einfederbewegung kommen, die jedoch nicht ausreicht, um umzuschnappen.

Es kommt es nach Beendigung der kurzzeitigen Beschleunigung wieder zu einem Rückstellen, das heißt, dass das Blattfederelement wieder in die erste Form zurückkehrt.

Erst wenn eine hinreichende, aus der Beschleunigung resultierende Kraft über eine ausreichende Zeit anliegt, kommt es zur Formänderung des Blattfederelements, verbunden mit dem Zerbrechen der üblicherweise aus Glas bestehenden Ampulle. Das Blattfederelement ist demzufolge ein mechanischer Integrator, der die Beschleunigungskraft über die Zeit integriert. Dabei kann durch Auslegung des Blattfederelements hinsichtlich seiner Federeigenschaften, der Dicke, der Geometrie etc. die Federkennlinie wie auch der Weg, der bis zum Erreichen des Umschnapppunktes zurückzulegen ist, eingestellt werden.

Insgesamt lässt demzufolge die Aktivierungseinrichtung die vollständige Entkopplung der Lagerung respektive Fixierung der Ampulle im Gehäuseinneren von der Anordnung, Ausgestaltung und Verspannung des Zellstapels und damit auch die Entkopplung der über die Aktivierungseinrichtung eingestellten Auslöseschwelle von etwaigen Gehäusegeometrieänderungen zu, bei gleichzeitiger Sicherstellung einer hinreichend hohen Auslöseschwelle und einem ausreichenden Schutz gegen eine unbeabsichtigte Betätigung derselben beispielsweise bei einer Fallbeschleunigung.

Die beiden Blattfederelemente sind zweckmäßigerweise entgegengesetzt zueinander vorgespannt, das heißt, dass das obere Blattfederelement die Ampulle gegen das untere Blattfederelement spannt und umgekehrt. In diesem Fall schnappt zwangsläufig nur das untere Blattfederelement bei hinreichender Beschleunigung um.

Alternativ ist es denkbar, dass beide Blattfederelemente gleichsinnig vorgespannt sind und bei Aufbringen einer beschleunigungsbedingten Kraft simultan von der ersten in die zweite Form umschnappen.

Um im Falle einer Betätigung der Aktivierungseinrichtung, wenn also das untere Blattfederelement umschnappt, das Aufbrechen sicherzustellen, ist zweckmäßigerweise unterhalb der Ampulle ein Aufbrechelement angeordnet, auf dem die Ampulle nach Umschnappen des Blattfederelements in die zweite Form aufschlägt. Dieses Aufbrechelement ist beispielsweise ein Metallzapfen oder dergleichen.

In weiterer Erfindungsausgestaltung können die Blattfederelemente jeweils einen mittigen Scheibenabschnitt sowie mehrere radial davon abstehende Federabschnitte aufweisen, über die sie jeweils an einer Wandung des die Blattfederelemente umgebenden Bauteils abgestützt sind. Dabei können bevorzugt drei oder mehr äquidistant um den Umfang des runden Mittelabschnitts verteilt angeordnete Federabschnitte vorgesehen sein. Über diese Federabschnitte, die bevorzugt in an dem Bauteil vorgesehene Aufnahmen eingreifen, erfolgt die höhenmäßige Festlegung und Abstützung der Blattfederelemente an dem umgebenden Bauteil.

Die Aufnahmen, in die die Federabschnitte eingreifen, sind so ausgelegt, dass eine Beweglichkeit der Federabschnitte gegeben ist, die ein Umschnappen zumindest des unteren Blattfederelements zulässt. Das heißt, dass diese Aufnahme oder die Aufnahmen quasi als keilförmige Kerbe oder Kerben ausgeführt sind oder dergleichen. Beispielsweise kann an dem umgebenden Bauteil eine entsprechende umlaufende Keilnut ausgebildet sein, in die die Federabschnitte eingreifen und an der sie in der ersten Form anliegen, aus welcher sie beim Umschnappen in die zweite Form wechseln und sich dabei innerhalb der Aufnahme bewegen. Alternativ sind auch separate einzelne Kerben denkbar.

Das die Blattfederelemente auflagernde Bauteil ist bevorzugt eine Hülse, in die die Ampulle nebst den Blattfederelementen eingesetzt sind. Die Hülse selbst ist bevorzugt auf einem Boden der Batterie oder dergleichen abgestützt, sie hat keine weitere Verbindung mehr zu einem der anderen Gehäuseabschnitte, um die eingangs beschriebene Entkopplung zu ermöglichen.

Das Schnappfederelement selbst ist bevorzugt aus Metall, insbesondere Federstahl, denkbar ist aber auch eine Ausführung aus einem Polymer oder anderen federnden Materialien.

Neben der Aktivierungseinrichtung selbst betrifft die Erfindung ferner eine aktivierbare Batterie für einen elektronischen Zündmechanismus, insbesondere für eine Artilleriemunition, umfassend eine Aktivierungseinrichtung der vorstehend beschriebenen Art.

Weitere Vorteile, Merkmale und Einzelheiten der Erfindung ergeben sich aus dem im Folgenden ausgeführten Ausführungsbeispiel sowie anhand der Zeichnungen.

Dabei zeigen:
- Fig. 1: eine Prinzipdarstellung, geschnitten, einer erfindungsgemäßen aktivierbaren Batterie nebst erfindungsgemäßer Aktivierungseinrichtung,
- Fig. 2: eine vergrößerte Teilansicht aus Fig. 1, und
- Fig. 3: eine Aufsicht auf ein Blattfederelement

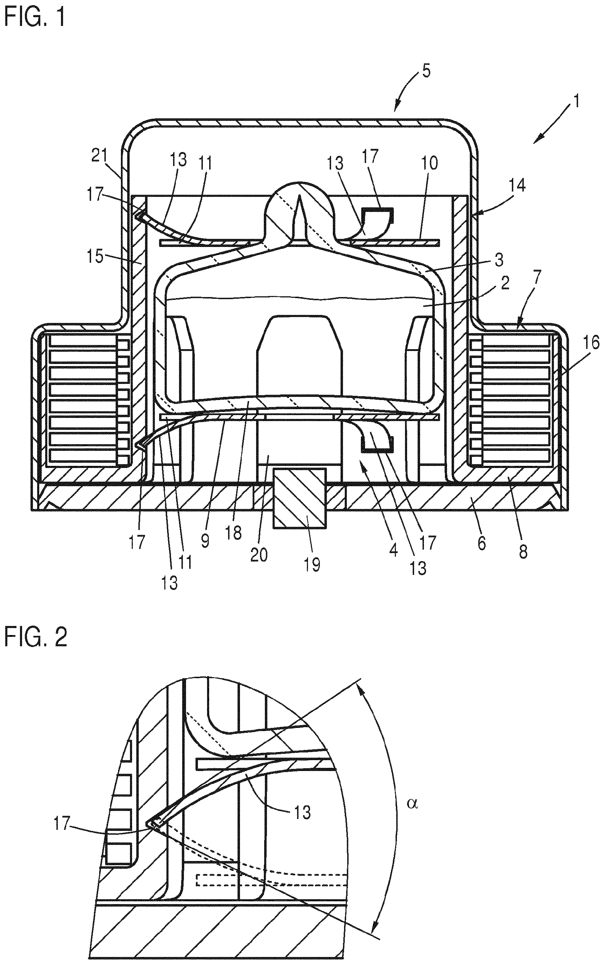

Fig. 1 zeigt eine erfindungsgemäße Batterie 1 mit einer erfindungsgemäßen Aktivierungseinrichtung, umfassend eine mit einem Elektrolyten 2 gefüllte Ampulle 3, insbesondere aus Glas, die nach dem Befüllen mit dem Elektrolyten 2 zugeschmolzen ist. Vorgesehen ist des Weiteren eine Einrichtung 4 zum Zerbrechen der Ampulle 3.

Die Ampulle 3 sowie die Einrichtung 4 zum Zerbrechen der Ampulle 3 sind in einem Gehäuse 5 angeordnet, umfassend einen Boden 6 sowie ein üblicherweise aus einem Metallblech gezogenes, topfartiges Gehäusebauteil 21. Dieses ist randseitig erweitert, um einen Aufnahmeraum für einen Zellstapel 7 umfassend eine Mehrzahl einzelner, über den Elektrolyten aktivierbarer Zellen zu bilden. Diese Zellen sind einerseits zwischen einem unteren Auflagerabschnitt 8, der Teil einer nachfolgend noch zu beschreibenden Hülse ist, und dem Gehäusebauteil 21 axial verspannt.

Die Einrichtung 4 zum Zerbrechen der Ampulle 3 umfasst ein erstes Blattfederelement 9 und ein zweites Blattfederelement 10, zwischen denen die Ampulle 3 verspannt ist. Das untere Blattfederelement 9 dient quasi als Plattform, auf dem sich die Ampulle 3 abstützt.

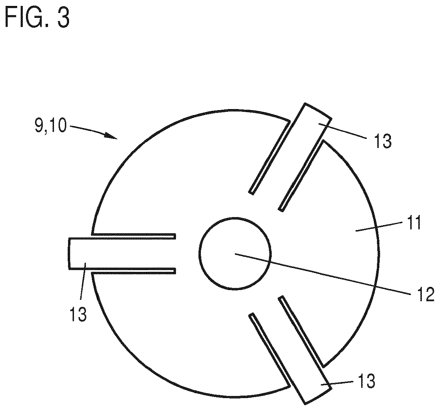

Jedes Blattfederelement 9, 10 umfasst einen mittigen runden Scheibenabschnitt 11 (vgl. Fig. 3), der mittig eine Durchbrechung 12 aufweist. Es umfasst des Weiteren im gezeigten Beispiel drei aus dem Scheibenabschnitt 11 ausgestanzte Federabschnitte 13, die radial gesehen länger sind als der Scheibenabschnitt 11, also zur Seite hin davon abstehen. Über diese Federabschnitte 13 sind die Blattfederelemente 9, 10 an einem gemeinsamen Bauteil 14 befestigt und vorgespannt, wie die Fig. 1 und 2 zeigen.

Das gemeinsame Bauteil 14 ist oder umfasst eine Hülse 15, die im Inneren des Gehäuses 4 aufgenommen ist. Im gezeigten Beispiel geht die Hülse 15 in den Auflagerabschnitt 8 über, auf dem der Zellstapel 7 aufgenommen ist. Der Abschnitt 8 geht in einen weiteren ringförmigen Abschnitt 16 über, der den Zellstapel 7 radial umgreift.

An der Hülse 15 sind entsprechende kerbenförmige Aufnahmen 17 ausgebildet, in denen die Federabschnitte 13 aufgenommen sind. Der Durchmesser der Hülse 15 ist dabei kleiner als der Außenradius, den die Federabschnitte 13 definieren, so dass die Federabschnitte 13, wie Fig. 1 und 2 anschaulich zeigen, gebogen werden, demzufolge also das jeweilige Blattfederelement 9, 10 gespannt wird. Ersichtlich sind in Fig. 1 die beiden Blattfederelemente 9, 10 gegeneinander gespannt. Das untere Blattfederelement 9 trägt auf seinem Scheibenabschnitt 11 die Ampulle 3, sie steht mit dem Ampullenboden 18 auf dem Scheibenabschnitt 11 auf. Der Scheibenabschnitt 11 des oberen Blattfederelements 10 liegt auf der Oberseite der Ampulle 3 auf, deren Spitze die Durchbrechung 12 durchgreift. Das heißt, dass die Ampulle 3 zwischen den beiden entgegengesetzt zueinander gespannten Blattfederelemente 9, 10 eingespannt ist.

Zumindest die unteren Aufnahmen 17, in denen die Federabschnitte 13 des unteren Blattfederelements 9 aufgenommen sind, sind im Wesentlichen keilförmig ausgeführt, wie insbesondere in Fig. 2 gezeigt ist. Der Öffnungswinkel a, den die keilförmigen Aufnahmen 17 definieren, beträgt beispielsweise 60°. Dies ermöglicht es, dass das untere Blattfederelement aus der in Fig. 1 gezeigten ersten Form in die in Fig. 2 gestrichelt gezeigte zweite Form schnappen kann. Dies geschieht, wenn bedingt beispielsweise durch einen Verschuss eines Geschosses, das die Batterie 1 aufweist, eine hinreichend hohe beschleunigungsbedingte Kraft auf die Ampulle 3 und über diese auf das untere Blattfederelement 9 wirkt, so dass dieses aus der in Fig. 1 und 2 durchgezogen gezeigten Position in diese in Fig. 2 gezeigte gestrichelte Position umschnappt. Das heißt, dass das die Ampulle 3 tragende bodenseitige Blattfederelement 9 seine Position ändert und demzufolge die Ampulle 3 bodenseitig nicht mehr aufgelagert ist. Beim Umschnappen bewegt sich der am Boden angeordnete Scheibenabschnitt 11 des unteren Blattfederelements 9 in Richtung des Bodens 6, ein Aufbrechelement 19 greift durch die zentrale Durchbrechung 12. Dies führt dazu, dass der Boden 18 der Ampulle 3 gegen das Aufbrechelement 19, beispielsweise ein Metallzapfen, schlägt, was dazu führt, dass die üblicherweise aus Glas bestehende Ampulle 3 aufbricht und der Elektrolyt über die Öffnungen 20 in der Hülse 15, von denen um den Umfang mehrere vorgesehen sind, zu dem Zellstapel 7 fließen kann.

Über den Öffnungswinkel der kerbenförmigen Ausnehmungen 17 kann auch der Hub, den das untere Blattfederelement 9 beim Umschnappen durchführt, eingestellt werden. Durch entsprechende Wahl des Blattfedermaterials, seiner Dicke und der Länge der Federabschnitte 13 kann insgesamt die Federkennlinie respektive die mechanischen Eigenschaften des jeweiligen Blattfederelements eingestellt werden, mithin also auch der Umschnapppunkt definiert werden.

Wenngleich beim Ausführungsbeispiel gemäß Fig. 1 die beiden Blattfederelemente 9, 10 gegeneinander verspannt sind, ist es auch denkbar, sie gleichsinnig zu verspannen, mithin also auch das obere Blattfederelement 10 so zu verspannen wie das untere Blattfederelement 9. In diesem Fall würde bei einer hinreichend hohen beschleunigungsbedingten Kraft mit einem definierten Gewichtsteil nicht nur das untere Blattfederelement 9, sondern auch das obere Blattfederelement 10 seine Form wechseln und in entsprechenden kerbenförmigen Ausnehmungen 17 umschnappen. In diesem Fall wird folglich die Auslöseschwelle nicht nur über das untere Blattfederelement respektive dessen Federeigenschaften definiert, sondern zusätzlich auch über das obere Blattfederelement 10.

Wie vorstehend ausführlich beschrieben ist die Aktivierungseinrichtung ausschließlich an der Hülse 15 befestigt respektive "aufgehängt". Es ist, außer zum Boden 6, keine Verbindung zu dem Gehäusebauteil 21 gegeben.

Dies führt dazu, dass die Aktivierungseinrichtung vom Gehäusebauteil 21 komplett entkoppelt ist. Die Position des Gehäusebauteils 21 und damit die Höhe der Batterie 1 kann aufgrund etwaiger Toleranzen innerhalb des Zellstapels 7, der axial über das Gehäusebauteil 21 verspannt ist, geringfügig variieren. Eine solche Variation wirkt sich jedoch nicht auf die Aktivierungseinrichtung aus, und daher insbesondere nicht auf die über die Aktivierungseinrichtung respektive insbesondere das untere Blattfederelement 9 definierte Auslöseschwelle. Dies ermöglicht es, dass auch innerhalb einer Serienfertigung solcher Batterien 1 sichergestellt werden kann, dass die Auslöseschwelle stets die gleiche ist, unabhängig davon, wie nun tatsächlich von Batterie 1 zu Batterie 1 gegebenenfalls aufgrund etwaiger Toleranzen die Gehäusehöhe schwankt.

Die Blattfederelemente 9, 10 sind bevorzugt aus Federstahl, der durch Stanzen auf einfache Weise in der entsprechenden Form mit dem Scheibenabschnitt 11 und den darin vorgesehenen, ausgestanzten Federabschnitten 13 und der zentralen Durchbrechung 12 gestanzt werden kann.

### Bezugszeichenliste

- 1: Batterie
- 2: Elektrolyt
- 3: Ampulle
- 4: Einrichtung zum Zerbrechen der Ampulle
- 5: Gehäuse
- 6: Boden
- 7: Zellstapel
- 8: Auflageabschnitt
- 9: Blattfederelement
- 10: Blattfederelement
- 11: Scheibenabschnitt
- 12: Durchbrechung
- 13: Federabschnitt
- 14: Bauteil
- 15: Hülse
- 16: ringförmiger Abschnitt
- 17: Aufnahmen
- 18: Boden
- 19: Aufbrechelement
- 20: Öffnung
- 21: Gehäusebauteil

## Patentansprüche

1. Aktivierungseinrichtung für eine Batterie für einen elektronischen Zündmechanismus, umfassend eine mit einem Elektrolyten (2) gefüllte Ampulle (3) sowie eine Einrichtung (4) zum Zerbrechen der Ampulle (3),
**dadurch gekennzeichnet,**
**dass** die Einrichtung (4) zum Zerbrechen zwei an einem gemeinsamen Bauteil (14) im Gehäuseinneren vorgespannt fixierte Blattfederelemente (9, 10) umfasst, zwischen denen die Ampulle (3) eingespannt ist,
wobei zumindest das die Ampulle (3) bodenseitig auflagernde Blattfederelement (9) bei Aufbringen einer beschleunigungsbedingten Kraft von einer ersten Form in eine zweite Form umschnappt.

2. Aktivierungseinrichtung nach Anspruch 1,
**dadurch gekennzeichnet,**
**dass** die beiden Blattfederelemente (9, 10) entgegengesetzt zueinander vorgespannt sind.

3. Aktivierungseinrichtung nach Anspruch 1,
**dadurch gekennzeichnet,**
**dass** beide Blattfederelemente (9, 10) gleichsinnig vorgespannt sind und bei Aufbringen einer beschleunigungsbedingten Kraft simultan von der ersten in die zweite Form umschnappen.

4. Aktivierungseinrichtung nach einem der vorangehenden Ansprüche,
**dadurch gekennzeichnet,**
**dass** unterhalb der Ampulle (3) ein Aufbrechelement (19) angeordnet ist, auf dem die Ampulle (3) nach Umschnappen des Blattfederelements (9) in die zweite Form aufschlägt.

5. Aktivierungseinrichtung nach einem der vorangehenden Ansprüche,
**dadurch gekennzeichnet,**
**dass** die Blattfederelemente (9, 10) jeweils einen mittigen Scheibenabschnitt (11) sowie mehrere radial davon abstehende Federabschnitte (13) aufweisen, über die sie jeweils an einer Wandung des die Blattfederelemente umgebenden Bauteils (14) abgestützt sind.

6. Aktivierungseinrichtung nach Anspruch 5,
**dadurch gekennzeichnet,**
**dass** drei oder mehr äquidistant um den Umfang des runden Scheibenabschnitts (11) verteilt angeordnete Federabschnitte (13) vorgesehen sind.

7. Aktivierungseinrichtung nach 5 oder 6,
**dadurch gekennzeichnet,**
**dass** an dem Bauteil (14) eine oder mehrere Aufnahmen (17) für die Federabschnitte (13), die in die eine oder die mehreren Aufnahmen (17) eingreifen, vorgesehen sind.

8. Aktivierungseinrichtung nach einem der vorangehenden Ansprüche,
**dadurch gekennzeichnet,**
**dass** das Bauteil (14) eine Hülse (15) ist.

9. Aktivierungseinrichtung nach Anspruch 8,
**dadurch gekennzeichnet,**
**dass** die Hülse (15) an einem Boden (6) abgestützt ist.

10. Aktivierungseinrichtung nach einem der vorangehenden Ansprüche,
**dadurch gekennzeichnet,**
**dass** die Blattfederelemente (9, 10) aus Metall, insbesondere Federstahl oder einem Polymer sind.

11. Aktivierbar Batterie für einen elektronischen Zündmechanismus, umfassend eine Aktivierungseinrichtung nach eine der vorangehenden Ansprüche.

## Claims

1. Activation device for a battery for an electronic ignition mechanism, comprising an ampoule (3) filled with an electrolyte (2) and a device (4) for breaking the ampoule (3),
**characterized in that**
the breaking device (4) comprises two leaf spring elements (9, 10), which are fixed with a prestress on a common component (14) in the housing interior and between which the ampoule (3) is clamped,
at least the leaf spring element (9) which supports the ampoule (3) on the bottom side snapping from a first shape into a second shape when a force due to acceleration is applied.

2. Activation device according to Claim 1,
**characterized in that**
the two leaf spring elements (9, 10) are prestressed oppositely to one another.

3. Activation device according to Claim 1,
**characterized in that**
the two leaf spring elements (9, 10) are prestressed in the same sense and snap simultaneously from the first into the second shape when a force due to acceleration is applied.

4. Activation device according to one of the preceding claims,
**characterized in that**
a breaking element (19), on which the ampoule (3) impacts after the leaf spring element (9) snaps into the second shape, is arranged below the ampoule (3).

5. Activation device according to one of the preceding claims,
**characterized in that**
the leaf spring elements (9, 10) respectively comprise a central disc section (11) and a plurality of spring sections (13) protruding radially therefrom, by means of which they are respectively supported on a wall of the component (14) enclosing the leaf spring elements.

6. Activation device according to Claim 5,
**characterized in that**
three or more spring sections (13) arranged equidistantly distributed around the circumference of the round disc section (11) are provided.

7. Activation device according to Claim 5 or 6,
**characterized in that**
one or more recesses (17) for the spring sections (13), which engage in the one or more recesses (17), are provided on the component (14).

8. Activation device according to one of the preceding claims,
**characterized in that**
the component (14) is a sleeve (15).

9. Activation device according to Claim 8,
**characterized in that**
the sleeve (15) is supported on a base (6).

10. Activation device according to one of the preceding claims,
**characterized in that**
the leaf spring elements (9, 10) are made of metal, in particular spring steel, or a polymer.

11. Activatable battery for an electronic ignition mechanism, comprising an activation device according to one of the preceding claims.

## Revendications

1. Dispositif d'activation pour une batterie pour un mécanisme d'allumage électronique, comprenant une ampoule (3) remplie d'un électrolyte (2) ainsi qu'un dispositif (4) destiné à casser l'ampoule (3), **caractérisé en ce**
**que** le dispositif (4), pour casser, comporte deux éléments de ressort à lame (9, 10) calés avec précontrainte au niveau d'un élément structural commun (14) à l'intérieur du boîtier, entre lesquels l'ampoule est serrée (3),
au moins l'élément de ressort à lame (9) qui fait reposer l'ampoule (3) du côté du fond sautant brusquement d'une première forme dans une deuxième forme lors de l'application d'une force liée à l'accélération.

2. Dispositif d'activation selon la revendication 1, **caractérisé en ce que** les deux éléments de ressort à lame (9, 10) sont précontraints en sens inverse l'un de l'autre.

3. Dispositif d'activation selon la revendication 1, **caractérisé en ce que** les deux éléments de ressort à lame (9, 10) sont précontraints dans le même sens et sautent brusquement simultanément de la première forme dans la deuxième forme lors de l'application d'une force liée à l'accélération.

4. Dispositif d'activation selon l'une des revendications précédentes, **caractérisé en ce qu'**un élément de rupture (19) est disposé au-dessous de l'ampoule (3), sur lequel l'ampoule (3) vient frapper après le saut brusque de l'élément de ressort à lame (9) dans la deuxième forme.

5. Dispositif d'activation selon l'une des revendications précédentes, **caractérisé en ce que** les éléments de ressort à lame (9, 10) possèdent respectivement une portion de disque (11) centrale ainsi que plusieurs portions de ressort (13) espacées radialement de celle-ci, par le biais desquelles ils sont respectivement soutenus au niveau d'une paroi de l'élément structural (14) qui entoure les éléments de ressort à lame.

6. Dispositif d'activation selon la revendication 5, **caractérisé en ce qu'**au moins trois portions de ressort (13) sont présentes, distribuées de manière équidistante autour du pourtour de la portion de disque (11) ronde.

7. Dispositif d'activation selon la revendication 5 ou 6, **caractérisé en ce qu'**un ou plusieurs logements (17) pour les portions de ressort (13) sont présents au niveau de l'élément structural (14), lesquelles viennent en prise dans le ou les plusieurs logements (17).

8. Dispositif d'activation selon l'une des revendications précédentes, **caractérisé en ce que** l'élément structural (14) est une douille (15).

9. Dispositif d'activation selon la revendication 8, **caractérisé en ce que** la douille (15) est soutenue au niveau d'un fond (6).

10. Dispositif d'activation selon l'une des revendications précédentes, **caractérisé en ce que** les éléments de ressort à lame (9, 10) sont en métal, notamment en acier à ressort ou en un polymère.

11. Batterie activable pour un mécanisme d'allumage électronique, comprenant un dispositif d'activation selon l'une des revendications précédentes.
